# EUROPEAN PATENT APPLICATION

(11) **EP 4 704 432 A1**
(43) Date of publication of application: **04.03.2026**
(21) Application number: 24796197.2
(22) Date of filing: 25.04.2024
(51) Int. Cl.: H04N 21/431

(54) **BULLET-SCREEN DISPLAY METHOD AND APPARATUS, AND DEVICE AND STORAGE MEDIUM**

(30) Priority: 26.04.2023 CN 202310466603
(71) Applicant: BEIJING YOUZHUJU NETWORK TECHNOLOGY CO. LTD., Beijing 101299 (CN)
(72) Inventor: SHEN, Chang, Beijing 100028 (CN); CHEN, Zhuo, Beijing 100028 (CN)
(74) Representative: Grünecker Patent- und Rechtsanwälte PartG mbB
(86) International application number: PCT/CN2024/089914
(87) International publication number: WO 2024/222822

(57) **Abstract**

The disclosure provides a method for live comment display, apparatus, device and storage medium, the method comprises: acquiring first comment information in a target live streaming room, where the first comment information is real-time comment information in the target live streaming room; displaying a live comment object corresponding to the first comment information on a data display page of the target live streaming room, and the data display page is configured to display live streaming related data of the target live streaming room. It can be seen that by displaying the real-time comment information in the live streaming room on the data display page of the live streaming room in the form of a live comment object, the embodiment of the disclosure can facilitate the live streaming users to view the real-time comment information displayed in the form of a live comment on the data display page, and know the situation in the live streaming room in time, thus meeting the needs of the users watching the stream.

## Description

**This** application claims the priority of China invention patent application filed on April 26th, 2023, entitled "A METHOD FOR LIVE COMMENT DISPLAY, APPARATUS, DEVICE AND STORAGE MEDIUM", with the application number of 202310466603.X, the entire contents of which are incorporated into the present application by reference.

### FIELD

The present disclosure relates to the field of data processing, in particular to a method for live comment display, apparatus, device and storage medium.

### BACKGROUND

With the continuous development of video live streaming technology, anchor users usually need to use the data display page in the live streaming room to know the demands of the users watching the stream in time from the real-time live streaming comments, thereby adjust the subsequent live streaming content based on the demands of the users watching the stream.

At present, the interactive function of displaying real-time live comments on the data display page in the live streaming room can't help the live streaming users to know the real-time live comments conveniently and quickly, which can't meet the needs of the users watching the stream, therefore, how to help the live streaming users to know the real-time live comments in the live streaming room conveniently and quickly is a technical problem that needs to be solved urgently.

### SUMMARY

The embodiment of the present disclosure provides a method for live comment display.

In a first aspect, the present disclosure provides a method for live comment display, characterized in that the method comprises: acquiring first comment information in a target live streaming room; displaying a live comment object corresponding to the first comment information on a data display page of the target live streaming room; where, the live comment object carries the comment content in the first comment information, and the data display page is used to display the live streaming related data of the target live streaming room.

In an alternative embodiment, before displaying the live comment object corresponding to the first comment information on the data display page of the target live streaming room, it further comprises: determining the target live comment track of the live comment object from a plurality of live comment tracks; where, the plurality of live comment tracks are respectively placed at the predefined top position and/or a predefined bottom position on the data display page of the target live streaming room, and the plurality of live comment tracks are in a parallel positional relationship; correspondingly, displaying the live comment object corresponding to the first comment information on the data display page of the target live streaming room includes displaying the live comment object corresponding to the first comment information on the data display page of the target live streaming room based on the target live comment track of the live comment object.

In an alternative embodiment, the method further includes: displaying a reply box for a first live comment object on the data display page in response to a predefined first trigger for the first live comment object; receiving the reply information for the first live comment object based on the reply box; displaying a second live comment object corresponding to the first live comment object on the data display page of the target live streaming room; where, the second live comment object carries the reply information.

In an alternative embodiment, before receiving the reply information for the first live comment object based on the reply box, it further includes: displaying a plurality pieces of optional reply information corresponding to the first live comment object; correspondingly, receiving the reply information for the first live comment object based on the reply box includes determining the target reply information as the reply information for the first live comment object in response to the operation of adding the target reply information among the plurality pieces of optional reply information for the reply box.

In an alternative embodiment, the displaying a reply box for a first live comment object on the data display page in response to a predefined first trigger for the first live comment object includes displaying an interactive operation bar for the first live comment object in response to a control trigger for the first live comment object on the data display page; where, the interactive operation bar includes a reply control; displaying a reply box for the first live comment object in response to a reply trigger for the reply control.

In an alternative embodiment, the comment content in the first comment information further includes live streaming interactive resources, and the live comment object corresponding to the first comment information includes the live streaming interactive resources.

In an alternative embodiment, before displaying the live comment object corresponding to the first comment information on the data display page of the target live streaming room, it further includes: determining the live streaming interactive resource in the first comment information as live comment configuration information, and creating a live comment component corresponding to the first comment information based on the live comment configuration information; correspondingly, displaying the live comment object corresponding to the first comment information on the data display page of the target live streaming room includes: on the data display page of the target live streaming room, the live comment component carrying the live comment configuration information is rendered as a live comment object corresponding to the first comment information.

In an alternative embodiment, displaying the live comment object corresponding to the first comment information on the data display page of the target live streaming room includes: creating a live comment canvas in a predefined live comment display area in the upper layer of the data display page of the target live streaming room; rendering the live comment object corresponding to the first comment information on the live comment canvas; where, the live comment object is displayed in the predefined live comment display area.

In the second aspect, the present disclosure provides an apparatus for live comment display, which includes: an acquisition module for acquiring the first comment information in a target live streaming room; a first display module for displaying the live comment object corresponding to the first comment information on a data display page of the target live streaming room; where, the live comment object carries the comment content in the first comment information, and the data display page is used to display the live streaming related data of the target live streaming room.

In a third aspect, the present disclosure provides a computer-readable storage medium having stored therein instructions which, when run on a terminal device, cause the terminal device to implement the above method.

In a fourth aspect, the present disclosure provides a device for live comment display, including: a memory, a processor, and a computer program stored in the memory and executable on the processor in which the above method is implemented when the processor executes the computer program.

In a fifth aspect, the present disclosure provides a computer program product including computer programs/instructions which, when executed by a processor, implement the above method.

### BRIEF DESCRIPTION OF DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or the technical solutions in the prior art, the drawings required for use in the embodiments or the description of the prior art will be briefly introduced below, obviously, for ordinary technicians in this field, other drawings may be obtained based on these drawings without paying any creative labor.
FIG. 1 is a flowchart of a method for live comment display provided by an embodiment of the present disclosure;
FIG. 2 is a schematic diagram of a data display page provided by an embodiment of the present disclosure;
FIG. 3 is a schematic diagram of another data display page provided by an embodiment of the present disclosure;
FIG. 4 is a structural schematic diagram of an apparatus for live comment display provided by an embodiment of the present disclosure;
FIG. 5 is a structural schematic diagram of a device for live comment display provided by an embodiment of the present disclosure.

### DETAILED DESCRIPTION

In order to understand the above objects, features and advantages of the present disclosure more clearly, the scheme of the present disclosure will be further described below. It should be noted that the embodiments of the present disclosure and the features in the embodiments may be combined with each other without conflict.

In the following description, many specific details are set forth to facilitate a full understanding of the present disclosure, but the present disclosure may also be implemented in other ways different from those described herein; it is obvious that the embodiments in the specification are only part of the embodiments of the present disclosure, rather than all of the embodiments.

With the continuous development of video live streaming technology, anchor users usually need to use the data display page in the live streaming room to know the demands of the users watching the stream in time from the real-time live streaming comments, thereby adjust the subsequent live streaming content based on the demands of the users watching the stream.

At present, the interactive function of displaying real-time live comments on the data display page in the live streaming room can't help the live streaming users to know the real-time live comments conveniently and quickly, which can't meet the needs of the users watching the stream, therefore, how to help the live streaming users to know the real-time live comments in the live streaming room conveniently and quickly is a technical problem that needs to be solved urgently.

Therefore, the embodiment of the present disclosure provides a method for live comment display: acquiring first comment information in a target live streaming room, where, the first comment information belongs to real-time comment information in the target live streaming room; displaying the live comment object corresponding to the first comment information on the data display page of the target live streaming room, and the data display page is used to display the live streaming data of the target live streaming room. It can be seen that by displaying the real-time comment information in the live streaming room on the data display page of the live streaming room in the form of a live comment object, the embodiment of the present disclosure can facilitate the live streaming users to view the real-time comment information displayed in the form of a live comment on the data display page, and know the situation in the live streaming room in time, thus meeting the needs of the users watching the stream.

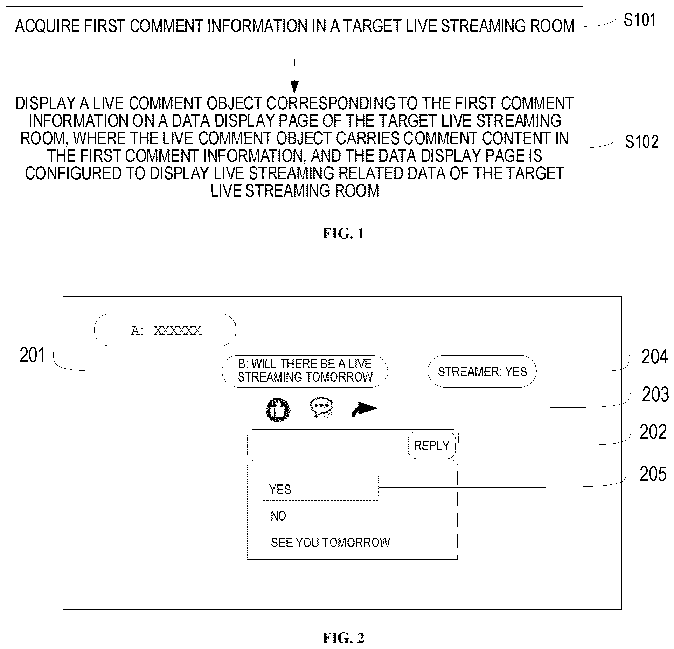

Based on this, an embodiment of the present disclosure provides a method for live comment display, and with reference to FIG. 1, it is a flowchart of a method for live comment display provided by an embodiment of the present disclosure, the method includes:
S101: acquiring the first comment information in the target live streaming room.

The method for live comment display provided by the embodiments of the present disclosure may be applied to a live streaming clients, or to a live streaming plug-in deployed on the live streaming clients, etc. where, the live streaming users of the live streaming clients are usually called anchors or live streaming assistants, etc.

In the embodiment of the present disclosure, the target live streaming room is any type of live streaming room created by a live streaming user, which may include, for example, a live streaming room of music type, a live streaming room of food type, a live streaming room of chat interaction type, etc.

In an alternative embodiment, the first comment information may belong to real-time comment information in the target live streaming room. where, the real-time comment information in the target live streaming room may include the real-time comment information released by the users who enter the target live streaming room, e.g. text comment information and expression comment information. The first comment information may be any real-time comment information in the target live streaming room.

In another alternative embodiment, the first comment information may further include comment information of the target live streaming room within a preset time period. For example, the first comment information may be the comment information released by the users watching the stream within the latest 5 minutes from the current time point.

In an alternative embodiment, the real-time comment information in the target live streaming room may be displayed in the form of a real-time comment list. The embodiment of the present disclosure can acquire the first comment information in the target live streaming room from the real-time comment list in the target live streaming room. where, the first comment information belongs to the comment information in the real-time comment list in the target live streaming room.

S102: Displaying the live comment object corresponding to the first comment information on the data display page of the target live streaming room.
where, the live comment object carries the comment content in the first comment information, and the data display page is used to display the live streaming related data of the target live streaming room.

In the embodiment of the present disclosure, the live comment object corresponding to the first comment information refers to the live comment object carrying the comment content in the first comment information. That is to say, the current live streaming user can know the comment content in the first comment information in the target live streaming room in time through the live comment object displayed on the data display page of the target live streaming room.

In the embodiment of the present disclosure, the data display page can display the real-time live streaming images, comment information, live streaming related data and other contents of the target live streaming room.

In an alternative embodiment, the data display page may include a data large screen page. where, the data big screen page is used to display the data changes in the target live streaming room on the live streaming end, and the live streaming user can intuitively see the live streaming data changes in the target live streaming room based on the data big screen page.

In the embodiment of the present disclosure, live streaming related data of the target live streaming room are displayed on the data display page of the target live streaming room, where, the live streaming related data may be used to reflect the live streaming situation of the target live streaming room, and the live streaming related data may include analysis data used to reflect the traffic change situation of the target live streaming room, etc. For example, live streaming related data may include the total number of online viewers and the number of commentators in the target live streaming room, and other data. Live streaming related data may further include live streaming images, virtual gifts in the live streaming room, comment information, etc. The current live streaming users can intuitively know the live streaming situation of the target live streaming room based on the live streaming related data displayed on the data display page.

In the embodiment of the present disclosure, after acquiring the first comment information in the target live streaming room, the live comment object corresponding to the first comment information may be displayed on the data display page of the target live streaming room, thereby facilitating the current live streaming user to know the real-time comment information in the live streaming process in the target live streaming room in time based on the live comment object displayed on the data display page, and meeting the needs of the users watching the stream.

In an alternative embodiment, in the process of displaying the live comment object corresponding to the first comment information on the data display page, in order to enable the live comment object to be displayed at any position on the data display page. In actual applications, this may be achieved by creating a live comment canvas on the data display page. Specifically, the display position of the live comment object on the data display page is flexibly controlled through the live comment canvas.

In an alternative embodiment, firstly, a live comment canvas is created in the upper layer of the data display page of the target live streaming room. Then the live comment object corresponding to the first comment information is rendered on the live comment canvas. where, the position and style of the live comment canvas in the upper layer of the data display page may be determined based on actual needs. For example, a live comment canvas may be created at the top of the data display page, and then the live comment object corresponding to the first comment information may be rendered on the live comment canvas, thereby displaying the live comment object corresponding to the first comment information at the top of the data display page.

In actual applications, the comment content in the first comment information may include not only text comment information, but also live streaming interactive resources, etc. where, the live streaming interactive resources may include pictures, expressions, user avatars, virtual gifts, virtual activity signs and other types of live streaming interactive resources in the comment information released by users watching the stream in the target live streaming room.

In order to facilitate a more complete display of the comment content in the first comment information on the data display page of the target live streaming room in the future, including the display of live streaming interactive resources such as pictures, emojis, user avatars, virtual gifts, virtual activity logos, etc. in the comment content. The embodiment of the present disclosure can achieve the effect of displaying live streaming interactive resources such as pictures, emojis, user avatars, virtual gifts, etc. on the data display page of the target live streaming room by creating a live comment component.

Specifically, firstly, the live streaming interactive resource in the first comment information is determined as the live comment configuration information, and a live comment component corresponding to the first comment information is created based on the live comment configuration information. Then, on the data display page of the target live streaming room, the live comment component carrying the live comment configuration information is rendered as a live comment object corresponding to the first comment information.

In an alternative embodiment, a predefined live comment component rendering method, such as the ReactDOM.render rendering method, may be called to render the live comment component with live comment configuration information such as live streaming interactive resources as a live comment object corresponding to the first comment information. Thereby realizing the real-time comment information in the live streaming room can be displayed on the data display page in the form of live comment objects more completely, and it is convenient for the current live streaming user to know the comment situation in the target live streaming room in time based on live comment objects.

In the method for live comment display provided by the embodiment of the present disclosure, acquiring the first comment information in the target live streaming room. where, the first comment information belongs to the real-time comment information in the target live streaming room. Displaying on a data display page in the target live streaming room, a live comment object corresponding to the first comment information, where the data display page is used for displaying live streaming-related data of the target live streaming room. It can be seen that by displaying the real-time comment information in the live streaming room on the data display page of the live streaming room in the form of a live comment object, the embodiment of the present disclosure can facilitate the live streaming users to view the real-time comment information displayed in the form of a live comment on the data display page, and know the situation in the live streaming room in time, thus meeting the needs of the users watching the stream.

In actual application, in the process of displaying real-time comment information in the form of live comment on the data display page of the target live streaming room, the current live streaming user can also reply to any live comment object corresponding to the comment information on the data display page.

Specifically, when a predefined first trigger for a first live comment object on a data display page is received, a reply box for the first live comment object is displayed, and the current live streaming user can input reply information for the first live comment object based on the reply box.

In the embodiment of the present disclosure, the predefined first trigger for the first live comment object may include a click operation acting on the first live comment object, etc., for implementing the function of triggering the display of a reply box for the first live comment object, and the embodiment of the present disclosure does not limit the predefined first trigger.

As shown in FIG. 2, it is a schematic diagram of a data display page provided by an embodiment of the present disclosure, when a predefined first trigger for a first live comment object 201 on the data display page is received, a reply box 202 for the first live comment object 201 is displayed. where, the display position and display style of the reply box may be placed based on actual needs. For example, the display position of the reply box may be placed at a predefined position below the first live comment object, etc. and the embodiments of the present disclosure are not limited to this.

In an alternative embodiment, before the reply box for the first live comment object is displayed on the data display page of the target live streaming room, an interactive operation bar for the first live comment object can also be displayed. where, the interactive operation bar may include a reply control, and when a trigger for the reply control is received, a reply box for the first live comment object is displayed.

In the embodiment of the present disclosure, when a control trigger for a first live comment object on a data display page is received, an interactive operation bar for the first live comment object is displayed. where, the control trigger for the first live comment object may include a click operation on the first live comment object, a mouseenter event, etc., which are used to realize the function of triggering the display of the interactive operation bar for the first live comment object.

As shown in FIG. 2, when a control trigger for a first live comment object 201 on a data display page is received, an interactive operation bar 203 for the first live comment object 201 is displayed. where, the interactive operation bar 203 may include a reply control, a like control, etc. when a reply trigger for the reply control is received, a reply box 202 for the first live comment object 201 is displayed.

where, the display position of the interactive operation bar 203 may be placed at the display position of the first live comment object 201. For example, at the predefined lower position or a predefined right position of the first live comment object 201, the display position of the reply box 202 for the first live comment object 201 may be placed at the predefined lower position of the interactive operation bar 203, etc. The display position of the second live comment object 204 may be placed at the predefined right position of the first live comment object 201, etc.

In the embodiment of the present disclosure, the reply trigger for the reply control may include a click operation, a long press operation, etc. acting on the reply control. In an alternative embodiment, when a predefined first trigger for the first live comment object on the data display page is received, the first live comment object can also be highlighted, such as enlarging the display of the first live comment object or setting the display color of the first live comment object to a more obvious color. Thereby facilitating the current user to know the comment content in the first comment information carried in the first live comment object.

In an alternative embodiment, during the process of scrolling and displaying the first live comment object on the target live comment track, when a predefined first trigger for the first live comment object on the data display page is received, the first live comment object can also be paused from being displayed on the live comment track where the first live comment object is located. Subsequently, when receiving the reply information for the first live comment object or the second trigger (such as mouse removal) for the first live comment object, the first live comment object will continue to be scrolled and displayed on the live comment track.

In another alternative embodiment, when a predefined first trigger for a first live comment object on a data display page is received, the first live comment object may also be fixedly displayed at the predefined position on the data display page. Subsequently, when receiving the reply information or the second trigger for the first live comment object, return to the original display position and continue to scroll and display the first live comment object. where, the predefined position may include a middle position, an upper middle position, etc. of the data display page.

In the embodiment of the present disclosure, after the reply box for the first live comment object is displayed, the reply information of the current user for the first live comment object is received based on the reply box, and then the second live comment object corresponding to the first live comment object is displayed on the data display page of the target live streaming room. where, the second live comment object carries the reply information of the current user for the first live comment object.

In an alternative embodiment, in order to facilitate the users watching the stream to know the reply information of the current user to the first live comment object in time, the second live comment object carrying the reply information can also be displayed at the predefined right position of the first live comment object. As shown in FIG. 2, the first live comment object 201 carries the comment content of "Will there be a live streaming tomorrow?". When a predefined first trigger for the first live comment object 201 is received, a reply box 202 for the first live comment object 201 is displayed. Based on the reply box 202, when the reply information "Yes" of the current user for the first live comment object 201 is received, the second live comment object 204 carrying the reply information "Yes" is displayed at the predefined right position of the first live comment object 201.

In actual application, before the current user replies to the first live comment object based on the reply box, a plurality pieces of optional reply information corresponding to the first live comment object may be displayed, thereby facilitating the current user to reply to the first live comment object quickly.

Specifically, when a predefined first trigger for the first live comment object 201 on the data display page is received, a reply box 202 for the first live comment object 201 is displayed, and a plurality pieces of optional reply messages corresponding to the first live comment object 201 are displayed. where, the optional reply messages may include "Yes", "No" and "See it tomorrow", etc.

In an embodiment of the present disclosure, in the process of displaying a plurality pieces of optional reply information corresponding to the first live comment object on the data display page, when an operation of adding target reply information among the plurality pieces of optional reply information to a reply box is received, the target reply information is determined as the reply information for the first live comment object. Subsequently, based on the reply messages, the second live comment object corresponding to the first live comment object may be displayed on the data display page.

In the embodiment of the present disclosure, the operation of adding target reply information from a plurality pieces of optional reply information to the reply box may include a click operation acting on the target reply information, an operation of dragging the target reply information to the reply box, etc.

As shown in FIG. 2, in the process of displaying a plurality pieces of optional reply information corresponding to the first live comment object 201 on the data display page, when an operation of adding target reply information 205 to the reply box is received, the target reply information 205 is determined as the reply information for the first live comment object. Based on the target reply information 205, the second live comment object 204 corresponding to the first live comment object 201 is displayed on the data display page.

In the embodiment of the present disclosure, in the process of displaying each live comment object on the data display page of the target live streaming room, upon receiving a predefined first trigger for a first live comment object, a reply box for the first live comment object is displayed. The current user can reply to the first live comment object based on the reply box. When the reply information for the first live comment object is received, the second live comment object corresponding to the first live comment object is displayed on the data display page. where, the second live comment object carries the reply information for the first live comment object. It can be seen that when the embodiment of the present disclosure receives the predefined first trigger of the current user, it can trigger the reply box for displaying the first live comment object, thereby facilitating the current user to quickly reply to the comment information of the users watching the stream in the live streaming room on the data display page.

In actual applications, before displaying the live comment object corresponding to the first comment information on the data display page of the target live streaming room, it is also necessary to generate the live comment object corresponding to the first comment information. In addition, since the data display page may be provided with plurality of live comment tracks, before generating the live comment object corresponding to the first comment information, it is also necessary to determine the target live comment track for the live comment object corresponding to the first comment information from the plurality of live comment tracks.

In the embodiment of the present disclosure, a plurality of live comment tracks are respectively placed at the predefined top position and/or a predefined bottom position on the data display page of the target live streaming room, and the plurality of live comment tracks are in a parallel positional relationship.

In an alternative embodiment, in order to reduce the obstruction of the data display page by the live comment display and improve the current user experience, a preset number of live comment tracks may be placed at the predefined top position on the data display page, and a preset number of live comment tracks may be placed at the predefined bottom position on the data display page. For example, 4 live comment tracks may be placed at the predefined top position, and 3 live comment tracks may be placed at the predefined bottom position. The current user can know about the live streaming related data on the data display page based on the area on the data display page that is not obstructed by the live comment track.

In the embodiment of the present disclosure, the target live comment track may be any live comment track on the data display page, and after the target live comment track of the live comment object is determined, the live comment object corresponding to the first comment information is displayed on the data display page of the target live streaming room based on the target live comment track of the live comment object.

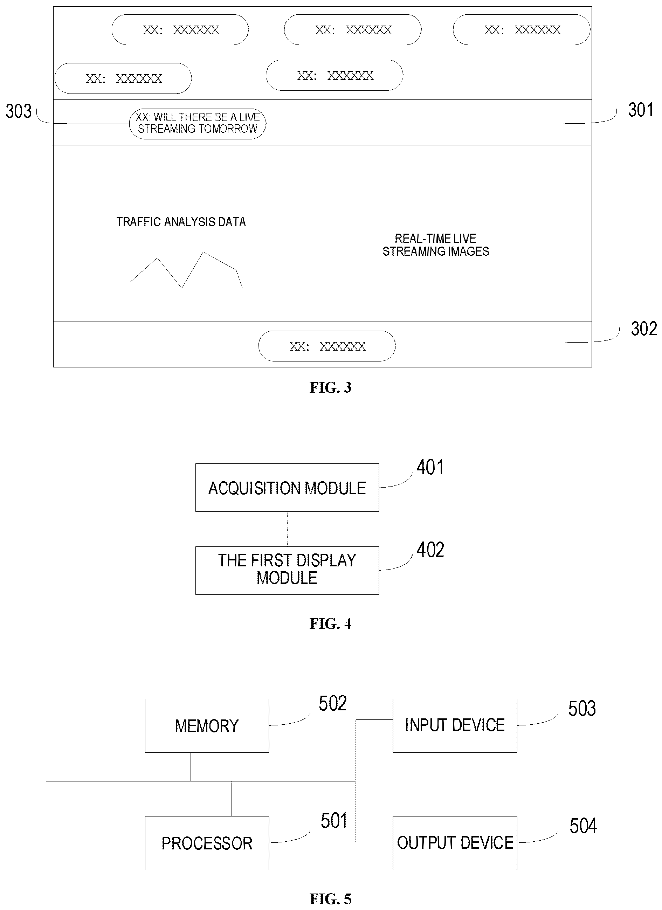

In an alternative embodiment, the target live comment track can also be determined for the first comment information from a plurality of live comment tracks on the data display page, and each of the plurality of live comment tracks is configured with track position information and live comment motion information respectively. where, the track position information may be used to indicate the display position of the live comment track on the data display page. For example, the track position information may include a predefined bottom position, a predefined top position, etc. displayed on the data display page. As shown in FIG. 3, it is a schematic diagram of another data display page provided by the embodiment of the present disclosure, where, the live comment track 301 is displayed at the position of the top third line of the data display page, that is, the track position information is the position of the top third line.

The live comment motion information may be used to characterize the motion type of the live comment object displayed on the corresponding live comment track. where, the motion type of the live comment object may include being fixedly displayed on the data display page and disappearing after staying for a preset period of time. It can also be displayed on the data display page by scrolling from right to left according to the preset moving speed.

It should be noted that it is assumed that the live comment motion information is fixedly displayed on the data display page and disappears after staying for a preset period of time. As shown in FIG. 3, the live comment object on the live comment track 302 may be displayed on the data display page for 5 seconds and then hidden, and the next live comment object may be displayed continuously.

In addition, it is assumed that the live comment motion information is displayed on the data display page by scrolling from right to left according to the preset moving speed. As shown in FIG. 3, the live comment object on the live comment track 301 is displayed on the data display page by scrolling from left to right at the speed of 1 cm/s until it moves out of the data display page.

In an alternative embodiment, in order to be able to more evenly assign corresponding live comment tracks to each live comment object, in actual applications, when determining the target live comment track for the first comment information, the live comment track with more remaining space among the plurality of live comment tracks may be determined as the target live comment track corresponding to the first comment information based on the remaining space of the plurality of live comment tracks.

In another alternative embodiment, the target live comment track corresponding to the first comment information may also be a live comment track predetermined based on actual needs. For example, assuming that the first comment information is the important comment information related to the target live streaming room released by the target user, in order to facilitate the current live streaming user to know the comment content in the first comment information in time, the live comment track fixedly displayed on the data display page may be determined as the target live comment track corresponding to the first comment information.

In the embodiment of the present disclosure, after a target live comment track is determined for the first comment information from a plurality of live comment tracks, a live comment object corresponding to the first comment information is generated based on the track position information and live comment motion information of the target live comment track and the first comment information.

In an alternative embodiment, after acquiring the first comment information in the target live streaming room, the comment content in the first comment information may be encapsulated as a live comment object corresponding to the first comment information based on the track position information and live comment motion information of the target live comment track, thereby realizing the function of generating a live comment object.

In the embodiment of the present disclosure, the live comment object corresponding to the first comment information carries the track position information and live comment motion information of the target live comment track, as well as the comment content of the first comment information. Therefore, after the live comment object corresponding to the first comment information is generated, the live comment object corresponding to the first comment information may be displayed on the data display page of the target live streaming room based on the track position information, the live comment motion information and the first comment information carried in the live comment object.

As shown in FIG. 3, after acquiring the first comment information in the target live streaming room, it is assumed that the comment content in the first comment information is "live streaming tomorrow", and the target live comment track determined for the first comment information from a plurality of live comment tracks is live comment track 301. where, the track position information corresponding to the live comment track 301 is: the third line at the top of the data display page; the live comment motion information is: moving from left to right at the speed of 1 cm/s and displayed on the data display page. Then, based on the track position information, the live comment motion information and the first comment information, the live comment object 303 corresponding to the first comment information is generated, and then the live comment object 303 corresponding to the first comment information is displayed on the data display page of the target live streaming room.

In the embodiment of the present disclosure, firstly, acquiring the first comment information in the target live streaming room. Then, a target live comment track is determined for the first comment information from the plurality of live comment tracks. Next, based on the track position information and the live comment motion information of the target live comment track, and the first comment information, a live comment object corresponding to the first comment information is generated. Finally, based on the track position information, the live comment motion information and the first comment information carried in the live comment object, the live comment object is controlled to be displayed on the data display page of the target live streaming room. It can be seen that when the embodiment of the present disclosure acquires the first comment information in the target live streaming room, it can create a live comment object corresponding to the first comment information based on the track position information, the live comment motion information and the first comment information. Thereby realizing displaying the real-time comment information in the live streaming room on the data display page of the live streaming room in the form of a live comment object, can facilitate the live streaming users to view the real-time comment information displayed in the form of a live comment on the data display page, and know the situation in the live streaming room in time, thus meeting the needs of the users watching the stream.

Compared with the prior art, the technical solution provided by the embodiments of the present disclosure has at least the following advantages:
The embodiment of the present disclosure provides a method for live comment display: acquiring first comment information in a target live streaming room, where, the first comment information belongs to real-time comment information in the target live streaming room; displaying the live comment object corresponding to the first comment information on the data display page of the target live streaming room, and the data display page is used to display the live streaming data of the target live streaming room. It can be seen that by displaying the real-time comment information in the live streaming room on the data display page of the live streaming room in the form of a live comment object, the embodiment of the present disclosure can facilitate the live streaming users to view the real-time comment information displayed in the form of a live comment on the data display page, and know the situation in the live streaming room in time, thus meeting the needs of the users watching the stream.

Based on the embodiment of the above method, the present disclosure also provides an apparatus for live comment display, and with reference to FIG. 4, it is a structural schematic diagram of the apparatus for live comment display provided by the embodiment of the present disclosure, and the apparatus includes: an acquisition module 401 for acquiring the first comment information in the target live streaming room; a first display module 402 for displaying the live comment object corresponding to the first comment information on the data display page of the target live streaming room; where, the live comment object carries the comment content in the first comment information, and the data display page is used to display the live streaming related data of the target live streaming room.

In an alternative embodiment, the apparatus further includes: a determination module for determining a target live comment trajectory of the live comment object; where, the plurality of live comment tracks are respectively placed at the predefined top position and/or a predefined bottom position on the data display page of the target live streaming room, and the plurality of live comment tracks are in a parallel positional relationship; correspondingly, the first display module includes a display sub-module for displaying the live comment object corresponding to the first comment information on the data display page of the target live streaming room based on the target live comment track of the live comment object.

In an alternative embodiment, the apparatus further includes: a first display module for displaying a reply box for a first live comment object on the data display page in response to a predefined first trigger; a receiving module for receiving the reply information for the first live comment object based on the reply box; a second display module for displaying a second live comment object corresponding to the first live comment object on the data display page of the target live streaming room; where, the second live comment object carries the reply information.

In an alternative embodiment, the apparatus further includes a second display module for displaying a plurality pieces of optional reply information corresponding to the first live comment object; correspondingly, the receiving module includes a determination sub-module for determining the target reply information as the reply information for the first live comment object in response to the operation of adding the target reply information among the plurality pieces of optional reply information for the reply box.

In an alternative embodiment, the apparatus further includes an operation bar display module for displaying an interactive operation bar for a first live comment object on the data display page in response to a control trigger for the first live comment object; where, the interactive operation bar includes a reply control; correspondingly, the first display module includes a display sub-module for displaying a reply box for the first live comment object in response to a reply trigger for the reply control.

In an alternative embodiment, the comment content in the first comment information further includes live streaming interactive resources, and the live comment object corresponding to the first comment information includes the live streaming interactive resources.

In an alternative embodiment, the apparatus further includes: a live comment component creation module for determining the live streaming interactive resource in the first comment information as live comment configuration information, and creating a live comment component corresponding to the first comment information based on the live comment configuration information; correspondingly, the first display module includes a first rendering sub-module for rendering the live comment component carrying the live comment configuration information as a live comment object corresponding to the first comment information on the data display page of the target live streaming room.

In an alternative embodiment, the first display module includes: a live comment canvas creation sub-module for creating a live comment canvas in an upper layer of a data display page in the target live streaming room; a second rendering sub-module for rendering the live comment object corresponding to the first comment information on the live comment canvas where, the live comment object is displayed in the predefined live comment display area.

In the apparatus for live comment display provided by the embodiment of the present disclosure: acquiring first comment information in a target live streaming room, where, the first comment information belongs to real-time comment information in the target live streaming room; displaying the live comment object corresponding to the first comment information on the data display page of the target live streaming room, and the data display page is used to display the live streaming data of the target live streaming room. It can be seen that by displaying the real-time comment information in the live streaming room on the data display page of the live streaming room in the form of a live comment object, the embodiment of the present disclosure can facilitate the live streaming users to view the real-time comment information displayed in the form of a live comment on the data display page, and know the situation in the live streaming room in time, thus meeting the needs of the users watching the stream.

In addition to the above methods and apparatus, the embodiment of the present disclosure also provides a computer-readable storage medium having stored therein instructions which, when run on a terminal device, so that when the instructions are run on the terminal device, cause the terminal device to implement method for live comment display described in the embodiment of the present disclosure.

The embodiments of the present disclosure also provide a computer program product including computer programs/instructions which, when executed by a processor, implement the method for live comment display described in the embodiment of the present disclosure.

In addition, the embodiment of the present disclosure also provides a device for live comment display, as shown in FIG. 5, which may include a processor 501, a memory 502, an input apparatus 503 and an output apparatus 504. The number of processors 501 in the device for live comment display may be one or more, and one processor is taken as an example in FIG. 5. In some embodiments of the present disclosure, the processor 501, the memory 502, the input apparatus 503 and the output apparatus 504 may be connected via a bus or other means, where, FIG. 5 takes connection via a bus as an example.

The memory 502 can be used to store software programs and modules, and the processor 501 executes various functional applications and data processing of the device for live comment display by running the software programs and modules stored in the memory 502. The memory 502 may mainly include a storage program area and a storage data area, where, the storage program area may store an operating system, application programs required by at least one function, etc. In addition, the memory 502 may include a high-speed random access memory and may further include a non-volatile memory, such as at least one disk storage means, a flash storage means, or other volatile solid-state storage means. The input apparatus 503 can be used to receive input digital or character information, and generate signal input related to user settings and function control of the device for live comment display.

Specifically, in this embodiment, the processor 501 will load executable files corresponding to the processes of one or more application programs into the memory 502 according to the following instructions, and the processor 501 will run the application programs stored in the memory 502, thereby realizing various functions of the above device for live comment display.

It should be noted that, in this document, relational terms such as "first" and "second" are merely used to distinguish one entity or operation from another entity or operation, and do not necessarily require or imply any actual relationship or order between these entities or operations. Moreover, the terms "comprises," "includes," or any other variations thereof are intended to cover non-exclusive inclusion, such that the process, method, article, or device that comprises a list of elements comprises not only those elements but also other elements not expressly listed, or further comprises elements inherent to such process, method, article, or device. Without further limitations, an element defined by the phrase "comprising one..." does not exclude the existence of other identical elements in the process, method, article or device comprising the element.

The above description is only a specific embodiment of the present disclosure, so that those skilled in the art can understand or implement the present disclosure. Many modifications to these embodiments will be readily apparent to those skilled in the art, and the generic principles defined herein may be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A method for live comment display, the method comprises:
acquiring first comment information in a target live streaming room;
displaying a live comment object corresponding to the first comment information on a data display page of the target live streaming room, wherein the live comment object carries comment content in the first comment information, and the data display page is configured to display live streaming related data of the target live streaming room.

2. The method of claim 1, wherein before displaying the live comment object corresponding to the first comment information on the data display page of the target live streaming room, the method further comprises:
determining, from a plurality of live comment tracks, a target live comment track of the live comment object, wherein the plurality of live comment tracks are respectively placed at a predefined top position and/or a predefined bottom position on the data display page of the target live streaming room, and the plurality of live comment tracks are in a parallel positional relationship;
correspondingly, displaying the live comment object corresponding to the first comment information on the data display page of the target live streaming room comprises:
displaying the live comment object corresponding to the first comment information on the data display page of the target live streaming room based on the target live comment track of the live comment object.

3. The method of claim 1, wherein the method further comprises:
displaying a reply box for a first live comment object on the data display page in response to a predefined first trigger for the first live comment object;
receiving reply information for the first live comment object based on the reply box;
displaying a second live comment object corresponding to the first live comment object on the data display page of the target live streaming room, wherein the second live comment object carries the reply information.

4. The method of claim 3, wherein before receiving the reply information for the first live comment object based on the reply box, the method further comprises:
displaying a plurality pieces of optional reply information corresponding to the first live comment object;
correspondingly, receiving the reply information for the first live comment object based on the reply box comprises:
determining target reply information as the reply information for the first live comment object in response to an operation of adding the target reply information from the plurality pieces of optional reply information to the reply box.

5. The method of claim 3, wherein displaying the reply box for the first live comment object on the data display page in response to the predefined first trigger for the first live comment object comprises:
displaying an interactive operation bar for the first live comment object on the data display page in response to a control trigger for the first live comment object, wherein the interactive operation bar comprises a reply control;
displaying the reply box for the first live comment object in response to a reply trigger for the reply control.

6. The method of claim 1, wherein the comment content in the first comment information further comprises a live streaming interactive resource, and the live comment object corresponding to the first comment information comprises the live streaming interactive resource.

7. The method of claim 6, wherein before displaying the live comment object corresponding to the first comment information on the data display page of the target live streaming room, the method further comprises:
determining the live streaming interactive resource in the first comment information as live comment configuration information, and creating a live comment component corresponding to the first comment information based on the live comment configuration information;
correspondingly, displaying the live comment object corresponding to the first comment information on the data display page of the target live streaming room comprises:
rendering the live comment component carrying the live comment configuration information as the live comment object corresponding to the first comment information on the data display page of the target live streaming room.

8. The method of claim 1, wherein displaying the live comment object corresponding to the first comment information on the data display page of the target live streaming room comprises:
creating a live comment canvas in a predefined live comment display area in an upper layer of the data display page of the target live streaming room;
rendering the live comment object corresponding to the first comment information on the live comment canvas, wherein the live comment object is displayed in the predefined live comment display area.

9. An apparatus for live comment display, the apparatus comprises:
an acquisition module for acquiring first comment information in a target live streaming room;
a first display module for displaying a live comment object corresponding to the first comment information on a data display page of the target live streaming room, wherein the live comment object carries comment content in the first comment information, and the data display page is configured to display live streaming related data of the target live streaming room.

10. A computer-readable storage medium having stored thereon instructions which, when executed on a terminal device, cause the terminal device to implement the method according to any one of claims 1 to 8.

11. A device for live comment display, comprising: a memory, a processor, and a computer program stored in the memory and executable by the processor which, when executed by the processor, causes the processor to implement the method according to any one of claims 1 to 8.
